# EUROPEAN PATENT SPECIFICATION

(11) **EP 1 377 512 B1**
(45) Date of publication and mention of the grant of the patent: **14.03.2007**
(21) Application number: 02733873.0
(22) Date of filing: 22.03.2002
(51) Int. Cl.: B65H 45/101, B65D 85/67, B26D 3/10

(54) **PACKAGING A STRIP OF MATERIAL OF VARYING WIDTH**
VERPACKEN EINER MATERIALBAHN MIT VARIIERENDER BREITE
EMBALLAGE D'UNE BANDE DE MATERIAU DE LARGEUR VARIABLE

(30) Priority: 23.03.2001 US 278272 P
(43) Date of publication of application: 07.01.2004
(73) Proprietor: BKI Holding Corporation, Wilmington, DE 19081 (US)
(72) Inventor: JOHNSON, Robert, A., Turnersville, NJ 08012 (US); ZUHLSDORF, J. C., Gevas Pack. & Converting Tec Ltd, Boca Raton, FL 33487 (US); GRETTER, Carlo, Boynton Beach, FL 33426 (US); ROBERTS, John, H., Memphis, TN 38104 (US)
(74) Representative: Grünecker, Kinkeldey, Stockmair & Schwanhäusser Anwaltssozietät
(86) International application number: PCT/US2002/008772
(87) International publication number: WO 2002/076865

(56) References cited:
- US-A- 3 729 367
- US-A- 5 966 905
- US-B1- 6 336 307

## Description

This invention relates to a package of a strip material of varying width and to a method for manufacturing a composite article which includes a portion of the strip.

### BACKGROUND OF THE INVENTION

Strips of material are used in many end uses including but not limited to the manufacture of diapers and other absorbent products. The strips are cut on the manufacturing line at longitudinally spaced transverse cut lines to divide the strip into individual sheet elements each used in the manufacture of a respective absorbent product. Generally these strips are also cut to provide different widths along the length of the strip for various reasons including for shaping of the products to better match the body of the user and for better aesthetics. Most current processes of this type die cut the elements from a single strip of the material having a width at least equal to the maximum required width and discard the waste at the sides formed by cutting away the side portions to the narrower scalloped width. Attempts are made to recycle the waste portions, generally by grinding and returning the materials to the strip manufacturer. However, recent developments have increased the complexity of the materials thus increasing the cost and making recycling more difficult. There is therefore pressure to reduce the amount of waste.

Previously, packages of a continuous strip of material have been formed using a technique known as "festooning" in which the strip is folded back and forth to lay a series of strip portions back and forth with each portion being folded relative to the next about a line transverse to the strip. The technique of festooning has been available for many years and is used in packaging many different types of materials but particularly material of a fibrous nature such as fabric, non-woven strips and the like. In this technique, the strip is conventionally guided into a receptacle such as a cardboard box while a first reciprocating movement causes portions of the strip to be laid across the receptacle and folded back and forth and a second reciprocating movement causes the positions of the portions to be traversed relative to the receptacle transversely to the portions. Normally the receptacle comprises a rigid rectangular container at least partly of cardboard having a base and four upstanding sides.

The post-published WO 02/064472 described a package of continuous strip of material which comprises a plurality of parallel side-by-side stacks. Each of the stacks containing a length of the strip which is then folded. The strip is varying in width including wider and narrower portions. The leading end of the strip portion within one stack can be spliced to the trailing portion of the strip of the adjacent stack; otherwise, adjacent stacks remain separate from each other.

US-A-3,729,267 describes a rubber product which comprises a block of a plurality of folded strips of equal width. The strips have been manufactured by providing a rubber web material and by slitting it in a plurality of parallel slits that are interrupted at intervals by the web. A plurality of adjacent stacks of rubber strip are received in a common package, and in use the rubber strips are withdrawn from the package and are heated and thereafter extruded through an outlet to a ribbon whose cross-sectional dimensions are held to fairly close tolerances.

In U.S. Patent No. 5,966,905, issued October 19th, 1999 to O'Connor et al., is disclosed an arrangement for packaging a strip in which the package is formed from a plurality of side by side stacks each containing one fan folded length of the strip, where the bottom end of each stack is connected by a splice portion to the top end of the next adjacent stack so that the strip is continuous through the package.

This arrangement has achieved significant commercial success and provides a structure which can supply at high speed a continuous length of strip to an end use machine such as a converting line for manufacturing diapers or feminine hygiene products. However, other end uses of the strip can also be provided.

In US Patent No. 5,956,926, issued September 28th, 1999 to O'Connor et al., is disclosed an arrangement in which the side by side stacks are formed by cutting with a plurality of side by side band saws, where the band saws are traversed from side to side as they move forwardly in the cutting action thus producing separated strips which vary in width along their length.

In PCT International application WO 01/02143 published January 11th, 2001 is disclosed by Eberle a package of the same construction as proposed by O'Connor, however the strips are separated in a manner which leaves small bridging sections periodically along the length of the slit line so as to hold the strip elements side by side during the folding and stacking process, instead of being completely slit so that each strip is wholly separated from the next.

In German application 19918765.7 is provided further disclosure of the package structure of Eberle (assigned to Gevas) including particularly the arrangement of the spliced connecting portions at the end of the package.

In German published Utility Model 298 23 580.3 by Eberle (assigned to Gevas) is also disclosed some detail of the folding arrangement by which the web with the partially slit strip elements is folded into the fan folded stack.

However, in all of these cases, the dividing lines between the strips are straight and parallel and equally spaced so that the strip is of constant width with parallel side edges throughout its length.

### SUMMARY OF THE INVENTION

It is one object of the present invention, therefore, to provide an improved package structure of a strip of material for cutting transversely of the sheet into a plurality of separate sheet elements arranged end to end.

It is a further object to provide an improved method of manufacturing composite articles in which an element of the article is cut from a continuous strip in which the amount of material used In forming a plurality of the strips side by side is reduced for improved efficiency.

According to a first aspect of the invention there is provided a package of strip material comprising the features of claim 1.

In this arrangement the fold lines of all the strip elements lie In a common plane at the end of the stack and the stack is stable and generally rectangular so as to avoid damage to strip edges or strip pieces by forces on non planar portions of the block.

The term "web" defines a layer of the sheet material which has a width sufficient to define a plurality of the strip elements side by side, and may or may not have side edges which are straight and parallel as described in more detail hereinafter.

Preferably, the dividing lines are arranged such that adjacent pairs of the dividing tines diverge from the straight condition in opposite directions to define portions of minimum width and portions of maximum width of each strip element However, other shapes of the strip are possible.

Preferably, the dividing lines are arranged such that the strip elements are identical to each other and the fold lines are arranged at a location along the length of the strip elements such that the portions of maximum width overlie one another and the portions of minimum width overlie one another within the stack of web portions and such that the strip elements are longitudinally offset such that the portions of maximum width of one strip element are nested with portions of minimum width of the next strip element throughout the stack of web portions.

Preferably, the web has straight side edges such that the folded web portions define a rectangular block with the side edges of the web portions lying in two common planes, thus defining two edge elements each having one side edge defined by an edge of the web and an opposed side edge defined by one of said dividing lines. The edge elements are maintained as narrow as possible and may be continuous as a strip which is withdrawn as waste. The edge strip elements can be withdrawn during the step of forming the dividing lines by pulling away the edge strips as trim waste or can be withdrawn when the package is complete. In both cases, the package can be wrapped after the edge strips have been removed, particularly if the amount of variation in the width of the strip is relatively small. Alternatively, the edge elements can be retained in place during transportation so that the side edges of the block are parallel and planar to protect the strip edges. The edge strip portions can be removed by unfolding or can be pulled away as a thin block or slice in one piece. If the edge elements are reduced to minimum width, they may be formed as individual pieces only at the locations between positions of maximum width of the next adjacent strip element with those positions of maximum width of the next strip element reaching to the edge of the web to minimize waste.

In a yet further arrangement, the shaping of the strips can be designed so that the edge strip elements with one straight side edge and one variable side edge can also be used as a supply strip for use in the end product, thus further reducing waste. The shaping of the strips may be designed to allow the strips to be cut, for example, to form leg openings in diapers, or may be used to allow the shaping of tailored target zones such as acquisition layers.

Preferably, the rectangular block is contained within a packaging material such as a bag or wrapping of a vacuum or shrink wrap arrangement which applies pressure against the side edges of the web portions.

Preferably, the bridge portions are arranged such that each of the portions of minimum width and each of the portions of maximum width of each strip element are connected to the next adjacent strip element by at least one, and more preferably two, bridge portions.

Preferably, an end connecting portion of each strip element is connected to an end connecting portion of a next adjacent strip portion so as to form a strip that is continuous along its length through the package.

Preferably, the block is substantially upright with a bottom and a top, two sides parallel to the edges of the strips of the stacks, and two ends containing the fold lines of the stacks; and wherein the end connecting portion of the bottom of each strip element is connected to the end connecting portion of the top of a next adjacent strip element to form the splice connecting portion which extends along one end of the block.

Preferably, the package is compressed downwardly so as to decrease the height of the stacks from a rest height to a compressed height; and wherein the package is engaged by packaging material which maintains the compression.

According to a second aspect of the invention there is provided a method of manufacturing a composite article containing a portion of a strip comprising: the features of claim 11.

It will be appreciated that the variations In width of the strip allow the strip portions to be tailored In width to follow those variations thus minimizing waste from the strip and maximizing the number of strips which can be cut from a web of predetermined width. The strip preferably has regions of greatest width and intervening regions of narrowest width. The strip portions can be cut so that their ends are at the widest part in which case they become narrower at the center between the ends, or so that their ends are at the narrowest part in which case they become wider at the center between the ends.

### BRIEF DESCRIPTION OF THE DRAWINGS

Embodiments of the invention will now be described in conjunction with the accompanying drawings In which:
Figure 1 is an isometric view of a package of a folded web according to the present invention with the web being divided into individual strip elements at longitudinally extending dividing lines, the package being shown prior to completion of splices connecting one strip element to the next and with the flexible packaging material omitted for convenience of illustration.
Figure 2 is a top plan view of a package similar to the package of Figure 1, with the flexible packaging material included and showing a modified shape of the dividing lines.
Figure 3 is an isometric view of the package of Figure 1 showing a reduced number of strip elements for convenience of illustration and showing the splice connections from each to the next.
Figure 4 is a side elevational view of an apparatus and method for forming the package of Figure 1.
Figure 5 is a top plan view of the apparatus of Figure 4.
Figure 6 is a side elevational view on an enlarged scale of the cutting roller for forming the dividing lines of the machine of Figure 4 showing the bridge elements which join each strip element to the next.
Figure 7 is a top plan view of the cutting roller and a portion of the web of Figure 14.
Figure 8 is a schematic side elevational view of a manufacturing line for cutting the strip into sheets.
Figure 9 is a top plan view of the line of Figure 8 where the strip portions or sheets are cut from the strip at the narrowest part.
Figure 10 is a top plan view of a part only of Figure 8 where the strip portions or sheets are cut from the strip at the widest part.

In the drawings, like characters of reference indicate corresponding parts in the different figures.

### DETAILED DESCRIPTION

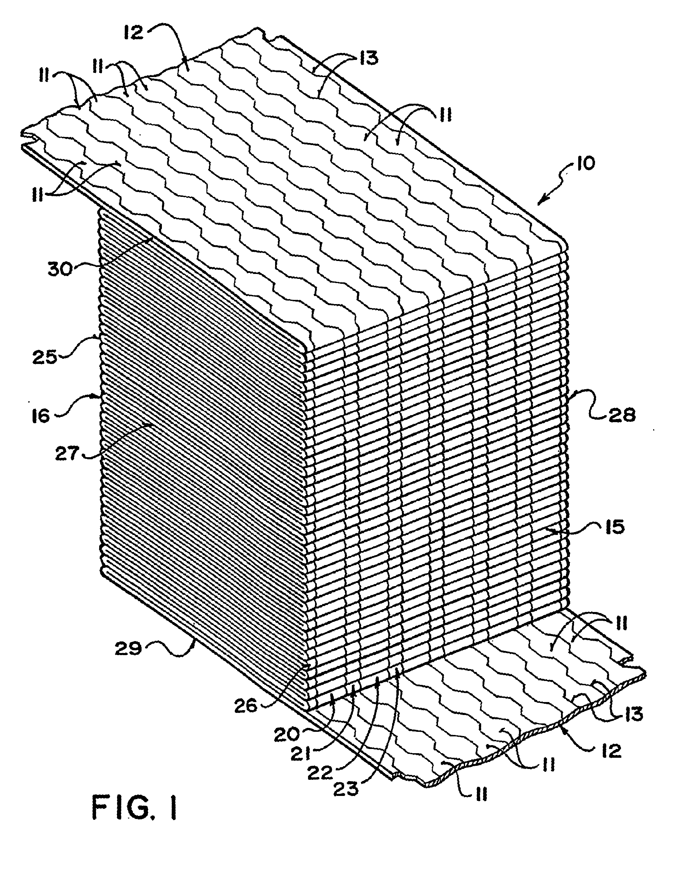

As shown in Figures 1, 2 and 3, one embodiment of package comprises a generally rectangular body or block 10 formed from a fan folded web 12 divided into a plurality of side by side strips 11 at dividing lines 13. The web is formed of a material to be packaged. Generally, this material will be of a fibrous nature, formed by woven or non-woven material, although this is not essential to the package structure. Many materials of various thicknesses can be packaged using the festooning technique, provided they can accept the creasing necessary at the end of each portion. The web is fan folded so that each web portion is folded relative to one next adjacent folded web portion about a first fold line transverse to the web and relative to a second next adjacent folded web portion about a second fold line transverse to the web and spaced longitudinally of the web from the first fold line.

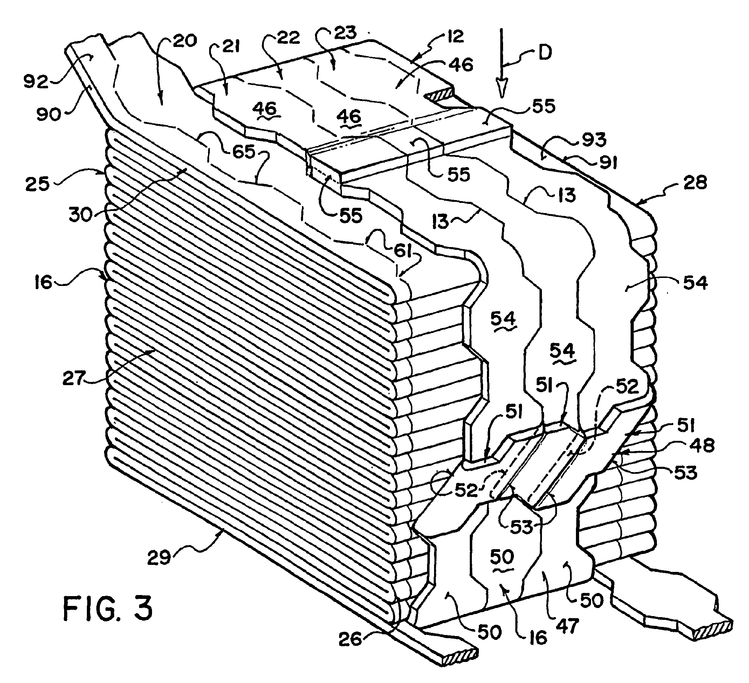

The package body is formed of the web 12 defining the plurality of side by side stacks of the strip 11 where each stack comprises a plurality of folded strip portions of the strip which are laid on top of one another. Thus, as shown in Figure 3, the web 12 is folded back and forth at respective end fold lines 25 and 26 so that the fold lines lie in a common vertical plane defining the ends 15 and 16 of the stack. Each portion of the web lies directly on top of the previous portion so that side edges 27 and 28 of the portions of the web define a first set of lines in a common plane at right angles to the web portions which contain all the side edges 27 of the stack, and, similarly, the side edges 28 of the web of the stack of the web define a second set of lines in the common plane at right angles to the web portions which contain all the side edges 28 of the stack.

Thus, the package is formed by stacking the portions each on top of the next from a bottom end portion 29 up to a top end portion 30 to form the stack. The package is thus formed from the plurality of side by side stacks 20, 21, 22, 23 of the side by side strips divided from the web 12. Each of the stacks has a length equal to that of the other stacks and therefore equal to that of the package. The stacks are formed up to a common height which is therefore equal to the height of the package.

The package 10 is thus formed from a plurality of individual stacks of the strip arranged side by side. In Figure 1, there are shown eleven such stacks, whereas in Figure 3, for convenience of illustration, there are shown four such stacks arranged side by side forming a complete package structure defined by the folded web. Each stack is formed from a folded strip which is continuous through the stack. Each stack has a top end portion 30, a bottom end portion 29, two ends 15 and 16 which are opposed, and two sides which are opposed.

It will of course be appreciated that the dimensions of the package can be varied according to the requirements so that the number of stacks can be increased or decreased, the length and height of each stack can be varied to increase the number of folded strip portions and to increase the length of the folded strip portions.

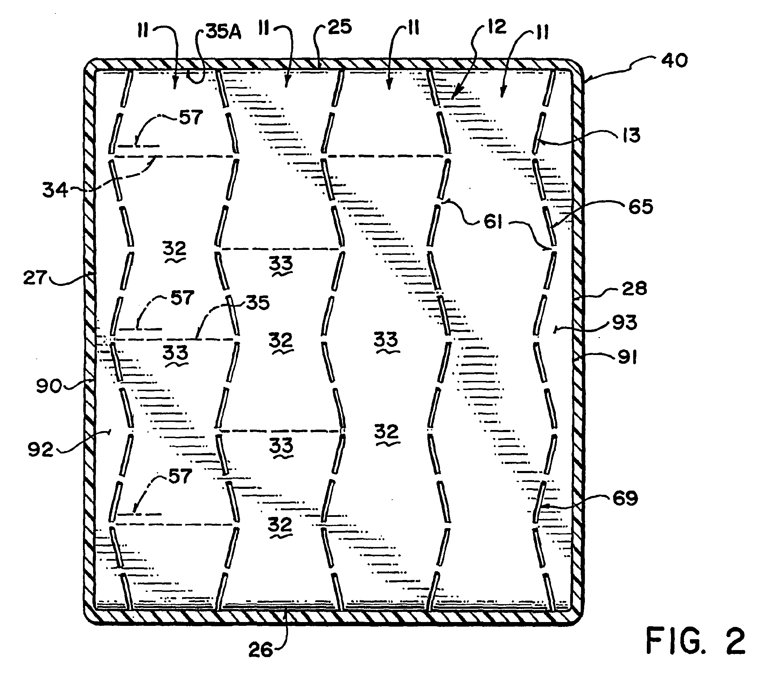

As best shown in Figure 2 in the plan view of the strips, the strips of each stack are folded back and forth from the fold lines 25 to the fold lines 26 to form a folded strip portion having a length equal to the distance between the fold lines.

As described hereinafter, the strips are divided each from the next in the web by the dividing lines 13 so that they have a varying width between the side edges of the strip. In the example shown, the strips are of a simple form in which the width varies periodically between narrow sections 32 and wider sections 33. More complex width variations can be employed in other examples. The variation can be curvilinear as shown in Figure 2 or may include straight line sections at the widest and narrowest parts as shown in Figures 1 and 3 with inclined parts of the dividing lines in between the widest and narrowest parts.

The dividing lines are each formed as described hereinafter by a blade which presses against an anvil roller. The blade has continuous blade elements separated by cut-outs. The blade elements act with the anvil roller to crush or cut the material and at the cut outs the material remains uncrushed or uncut or intact. Depending upon the type of material, the blades may actually cut the material or may crush the material while leaving it unbroken or un-slit, thus forming a line of weakness at which the material can readily tear. Thus, in effect, the blades form a series of tear lines in the web, each tear line lying along the respective dividing line and each longitudinally spaced from the next by a bridge portion of the dividing line at which the web is intact.

The dividing lines are arranged such that each strip element is longitudinally continuous through the length of the folded web and such that each strip element can be unfolded in turn by pulling the strip element and separating it from a remaining part of the folded web by breaking the bridge portions.

In the example shown, the strip is intended for manufacturing diapers or similar products which are formed each from a respective sheet element cut from the length of the strip. Each sheet element in the example shown has an intended cut line 34. at the wider section 33 and a second intended cut line 35 also at the wider section 33 so that the narrower section 32 is located between the intended cut lines.

It will be appreciated that in the package structure as shown, no cutting of the strips in the transverse direction has yet occurred and the cut lines 34 and 35 are, in effect, imaginary lines. Their position can however be determined by the design of the sheet elements and the position along the length of the strip which forms the beginning and end of the sheet elements. The sheet elements are, in effect, thus arranged end to end so that each is separated from the next simply by cutting along the intended cut line.

It will be noted therefore from Figure 2 that each folded strip portion of each of the package bodies is defined by an exact whole number of sheet elements. In the example shown, the number of sheet elements is three, but this of course can be varied from a minimum of one up to a maximum which depends solely upon the maximum allowable size of the transportable package structure. In most cases, it is preferred that the folded strip portion will contain more than one sheet element since the sheet elements are often of the order of 15,24 cm (six inches) to 61 cm (two feet) in length and the required package structure will be generally significantly larger than this and certainly of the order of 1,22 m (four feet) in length.

In the example shown, the design of the wider and narrower portions of the strip is arranged such that no waste is formed when the slitting action occurs and the wider portions match.exactly with the narrower portions of the next strip. However, it is possible in some examples that there will not be an exact match between the wider portions of one strip and the narrower portions of the next adjacent strip so that some waste pieces will be formed by cutting out of the structure and discarding of those waste pieces.

Thus, as shown in Figure 2, the strip portions will nest each exactly along side the next, with the narrower portions of one receiving the wider portions of the next.

The fact that the folded strip portion contains a whole number of the sheet elements and the sheet elements are identical ensures that the side edges of the each folded strip portion lie directly on top of the side edges of the previously laid folded strip portions. This allows the individual stacks to be unfolded in turn without any interleaving of the strip portions of one stack within the strip portions of the next adjacent stack which would prevent unfolding. As shown in the drawings, the strips throughout the height of the stack are exactly overlying. However, this requires an exact registration throughout the package of the length of the web portion as laid down between the fold lines with the length of the strip portions times the number of strip portions between the fold lines. However, this exact registration may be difficult to achieve and any small divergence will not interfere with the unfolding since that small divergence will not be enough to cause interleaving between adjacent strip elements. However, the widest parts of the strip elements may not form an exact straight vertical line but may be inclined as the slight divergence in the length between fold lines from the theoretically required length gradually shifts the widest part along the strip elements as laid down.

In the embodiment shown in Figures 1, 2 and 3 it will be noted that the position of the fold lines relative to the sheet elements is of no importance and it is possible to accept a fold line 35A at a position along the length of the sheet element different from the intended cut line 35. Thus, the fold lines are aligned but the sheet elements are longitudinally offset.

The package is wrapped by a flexible packaging material, preferably of heat sealable non-permeable plastics, which encompasses the whole of the package as indicated at 40 (not shown in Figure 1). The packaging material forms a sealed package which allows air to be extracted from the package in a vacuum action which can be used with physical compression D from the top and bottom of the package so as to compress the package to a reduced height in a vacuum packaging system. The amount of compression can be determined so as to minimize the volume of the package without interfering with the required loft of the product when withdrawn from the package. In this way, the package structure avoids the necessity for rigid sides of a box or similar container so the package structure is stable due to the compression of the layers to reduce the height of the layers and due to the pressure of each layer against the sides of the next adjacent layers. In an alternative packaging system, physical compression is combined with a heat shrink material in a bag which compresses and wraps the package. Top and bottom headers can be used to prevent distortion of and damage to the package.

Compression of the package is only practical in the direction D which is at right angles to the surfaces of the portions of the strip. This acts to compress the height of the stacks so that the thickness of each strip portion in the direction D is reduced by that compression. Compression along the portions or at right angles to the stacks is not practical since this will act to distort the strip. Mechanical compression of the package in the direction D thus reduces the dimension of the package in that direction allowing the air to be withdrawn from the flexible packaging material 40 causing the packaging material to be pulled down onto the package to maintain it in its compressed condition and to apply pressures tending to hold the stacks in intimate contact.

The strip of each stack is connected to the next by a traverse or spliced portion of the strip which extends from one stack to the next so as to form a continuous strip through the full length of the package. The technique for connecting the strip of each stack to the next layer is shown and described in more detail in the above prior patent of O'Connor and is shown in Figure 3. Thus, four stacks 20, 21, 22 and 23 are shown. The strip of each stack is continuous from the top end portion 30 to a bottom end portion 29. The connection is effected by a tail portion 48 which extends from the bottom portion 47 beyond one end of the stack. The portion 48 extends along the end of the stack at 50 and includes a twist 51 with fold lines 52 and 53 to form a portion 54 extending along the end of the next adjacent stack. The portion 54 is connected by a splice 55 to the top portion 46 of the next adjacent stack.

Marking of the intended cut lines may be provided if required, as shown at 57 applied by a marker 56. The markings can comprise an ink jet marking, possibly in the form of a dot or square, visible both to the eye and to the machine or in some cases just to the machine. The marking may or may not be located directly at the cut line depending upon the location of the machine reader relative to the cutting blade and in the example shown, the marking is located in advance of the intended cut line. The marking may extend only across a short part of the width of the strip. It will be appreciated that as the markings are registered with respective ones of the cut lines, each marking is offset from its associated cut line by the same distance.

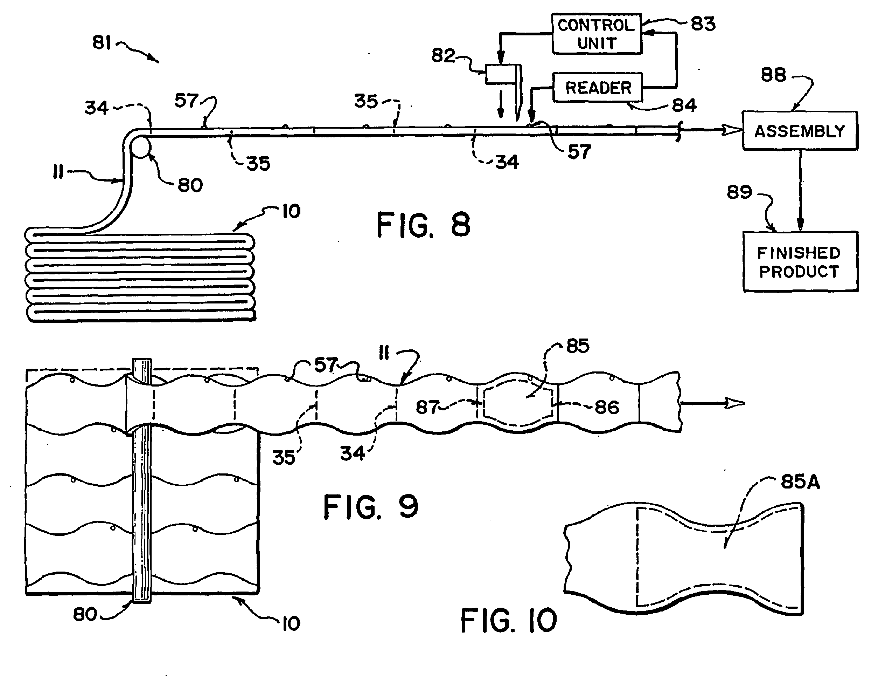

Turning now to Figures 8, 9 and 10, there is shown schematically the unfolding and cutting line for using the strip and separating the strip into the separate sheet elements and assembly of those sheet elements with other components into a composite article such as a diaper or feminine hygiene product. Thus, the package is indicated at 10 and the strip 11 is withdrawn from the package over a guide member 80 for directing into an operating line 81. A cutting device 82 is operated by a control unit 83 which receives registration information from a reader or sensor 84.

The reader of scanner 84 can be arranged to detect either the markings 57 applied to the strip prior to unfolding or the width of the strip or the length of a strip portion so as to operate the cutter 82 at the required location. Thus, in a preferred embodiment, the reader 84 detects the locations of maximum width and effects a cutting action at the required location to separate the strip into the required pieces.

Yet further, the cutter 82 may be of a more complex arrangement so that instead of simply cutting a transverse line the cutter acts to cut out a portion of the strip in a required shape as indicated schematically at 85 in Figure 9 and 85A in Figure 10. The variable width strip allows a variable width portion to be cut out while minimizing the waste on either side of the cut out portion 85, 85A. The ends of the cut out portion indicated at 86 and 87 in Figure 9 can be located at the narrowest part of the strip as shown in Figure 9 or at the widest part as shown in Figure 10. The transverse dividing line between the two sheet elements and, in some cases, the cut out lines 86 and 87, may be curved so as to provide a curvature to the outer periphery of the cut out portion 85 which is bowed outwardly in Figure 9 and bowed inwardly in Figure 10.

Thus the withdrawn strip element is cut at longitudinally spaced positions into a series of identical strip portions each of which is assembled with other components into a respective one of the composite articles. The strip elements are shaped cyclically by the dividing lines to define a series of cycles formed by a strip part of greatest width followed by a strip part of least width and wherein each identical strip portion includes a single cycle. In Figure 10, each identical strip portion is cut from the next at the part of greatest width. In Figure 9, each identical strip portion is cut from the next at the part of least width.

Downstream of the cutter 82, the cut sheet piece is fed into an assembly system indicated at 88 where the cut piece is assembled with other components to feed the finished products into a finished product line 89. These arrangements are shown only schematically since the construction of a diaper assembly line is well known to one skilled in the art. Thus it will be appreciated that the cut sheet piece is one portion only of a finished composite article where the composite article is formed in individual separated pieces for sale and use independently. The cutter 82 may form part of the assembly line 88.

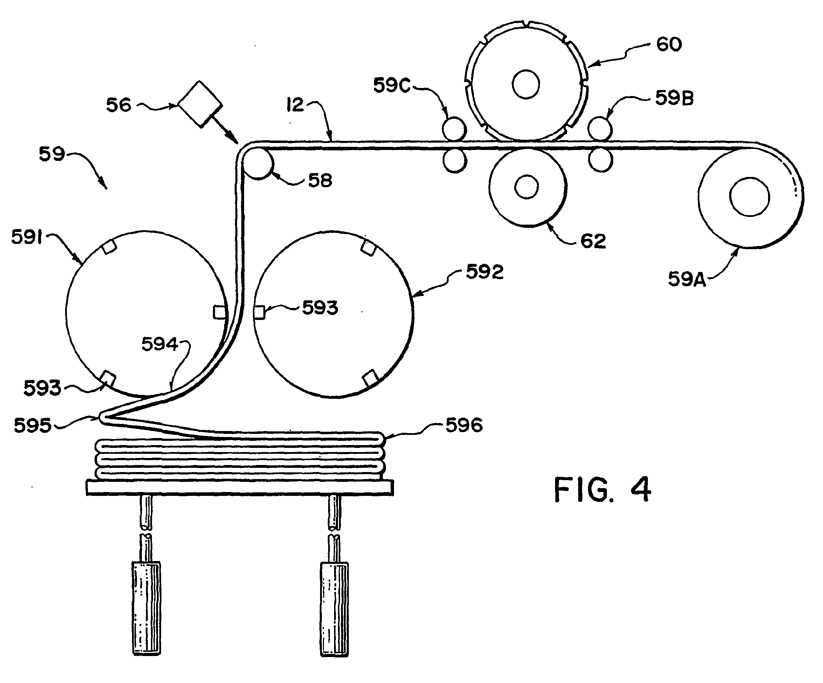

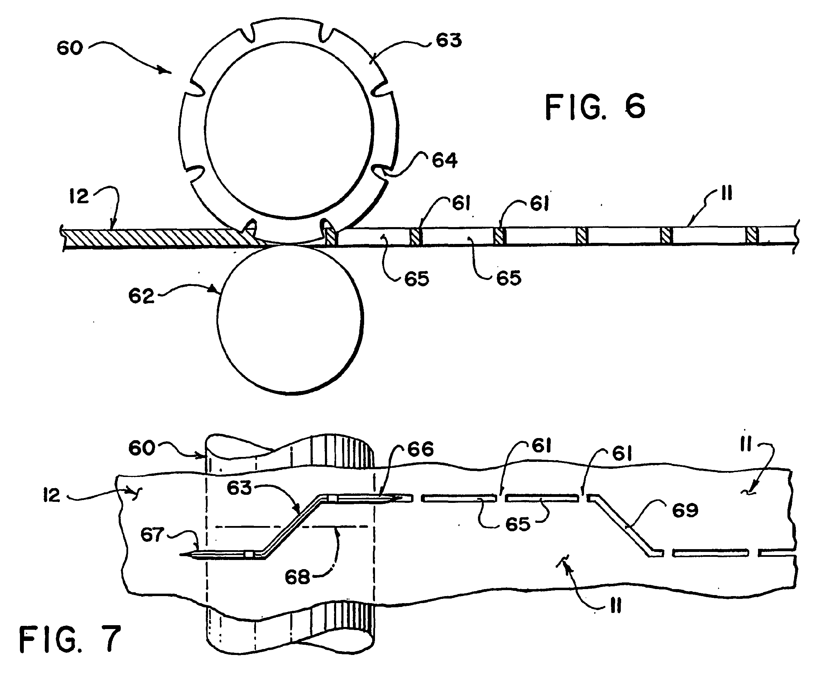

A package folding apparatus 59, shown in Figures 4, 5, 6 and 7, includes a supply roll 59A. The apparatus passes the web from the supply roll through nip rolls 59B and 59C and over a guide roller 58. The apparatus includes a slitting roller 60 which, instead of forming a continuous longitudinal slit line, forms lines which are formed partially by slits leaving periodic bridge portions 61. Thus, as shown in Figure 6, the roller 60 has a peripheral blade portion 63 with cutouts 64 arranged at angularly spaced positions around the peripheral blade 63. Thus, when the cutting blade 63 acts in cooperation with the anvil roller 62, it forms slits 65 separated by bridge portions 61 where no slitting action has occurred.

In practice, the cutouts 64 may have a width of the order of 0.2 mm. The number of cut outs around the periphery of the cutting roller may vary widely from only one in a circumference of 25,4 cm (10 inches) up to as many as 20 in a circumference of 25,4 cm (10 inches). The number depends upon the material in that the number is reduced where the material has sufficient strength that a reduced number of bridges provides the necessary interconnection between the strip elements to hold those strip elements together during further processing.

As shown in Figure 7, the blade 63 is shaped to define the diverging portions 66 and 67 either side of an imaginary center line 68 so as to provide the wider and narrower sections of the strip elements. In the arrangement shown in Figure 7, the wider and narrower diverging sections are shown using straight lines as opposed to the curvi-linear arrangement of Figure 2 The shape of the divergence from the center line 68 will vary depending upon requirements so that the shape of the finished strip element is tailored to the shape of the end use sheet as required while minimizing the amount of waste material carried by the strip element The amount of divergence from the center line can also vary significantly depending upon the end use.

In the embodiment shown in Figure 4, the folding system 59 comprises a pair of drums 591 and 592 which carry mechanical grippers 593 at angularly spaced positions around the drums. The drums have their axes generally parallel to the fold lines. The mechanical grippers 593 are shown only schematically but act to grasp the material of the web at the position of closest approach of the drums centrally between the fold lines of the package structure. The mechanical grippers alternately grasp the web fed from the roller 58 and carry that web around that one of the rollers to which the web is attached as indicated at 594 thus carrying the web to form the fold line 595. After that fold line is formed, the web is grasped by the other of the rollers and carried to the stack of fold lines as indicated at 596.

The fact that the strip elements are still connected by the bridge portions ensures that the web as a whole folds as a web rather than as individual strip elements, thus allowing the web to be grasped more easily and maintained without creases and without overlapping or interleaving of the individual strip elements. The drums are arranged to carry the web around approximately 120° from the point of closest approach to the discard position at the fold lines 595, 596.

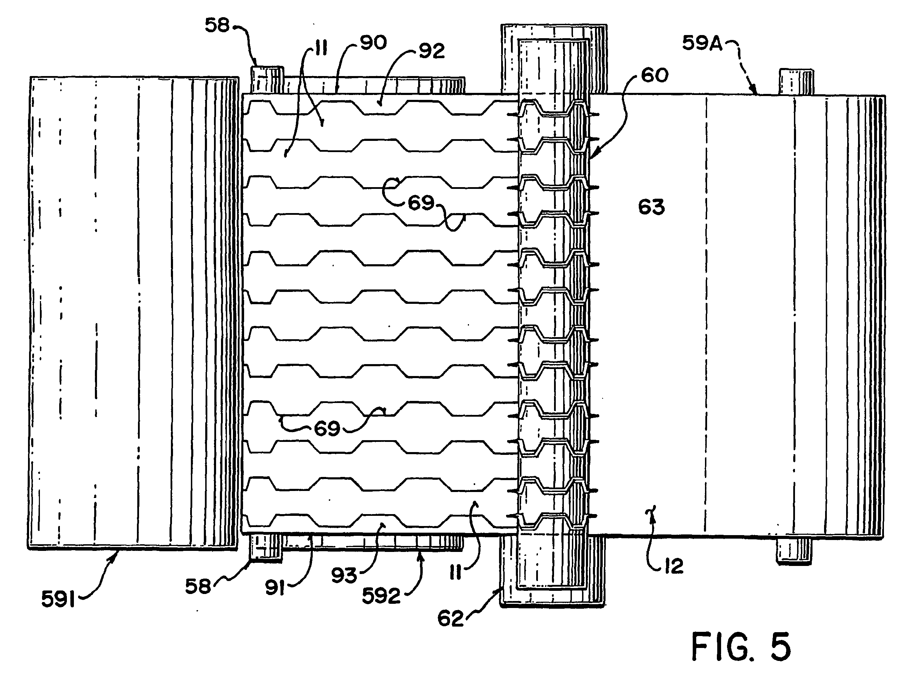

As shown in Figures 2 and 5, the cutting roller 60 forms a series of the dividing lines 69 at spaced positions across the web. The divergence from the center line 568 is arranged so that adjacent pairs of dividing lines 69 are in opposite phase so as to form nested wider and narrower portions of the strip elements as previously described. At the edges of the web, as indicated at 90 and 91, the adjacent dividing line 69 forms an edge strip portion 92, 93, respectively, which is defined by the side edge 90, 91, respectively, on one side and by the adjacent dividing line 69 on the other side. The strip portions 92 and 93 can be minimized in width but are preferably sufficiently wide so that the dividing line does not intersect the side edge 90, 91 thus forming the edge strip portion as a continuous strip of varying width. Alternatively, the edge strip portions comprise a full width of a strip plus an edge portion with one straight side edge so that the edge strip portion is used as a continuation of the other strips but a little wider so that more is cut out from the edge strip portion at the die cutter 82.

In the arrangement as shown, the edge strip portions 92 and 93 are left in place when the packaging material is applied to wrap the structure. The portions 92 and 93 thus define for the sides of the block of the folded web planar side surfaces defined by the edge 90, 91 of the web. This ensures that the edges of the first strip element adjacent the side edges are protected by those strip portions 92 and 93 and the compression by the packaging does not damage the wider parts of the strip elements by impact or compression.

The packaging material can be applied as a vacuum formed bag or as a heat shrink wrapping material. Other packaging materials may also be used, particularly bearing in mind that the structure is a rectangular block defined by the planar sides 90 and 91 and by the planar ends containing the fold lines 595, 596.

At the unwinding station shown in Figures 8 and 9, the block 10 is unwound so that each-strip element is unfolded and supplied to the machine as previously described. Prior to the first strip element being fed from one side of the block, the adjacent side strip portion 92, 93 is pulled away. This can be effected manually as a slab or block simply by pulling the whole structure containing the folded strip portion down away from the adjacent strip element. Alternatively, the waste strip portion 92, 93, can be stripped away from the adjacent strip element as it is fed and discharged into a suction removal device.

In some arrangements where the amount of width variation is relatively small, the end strip portions 92 and 93 can be removed prior to folding in a vacuum trim remover or subsequent to folding by manually pulling away.

It will be noted in the arrangements of Figure 2 that the fold lines of the individual strip elements are arranged to occur at the center line and at the end of one portion of the strip element so that the structure is symmetrical and the wider portions of the strip elements directly overlie the wider portions of the underlying strip elements in the folding action. Thus, the side edges of the strip elements along their full length are directly overlying in the folded condition. This avoids any edge portions of the strip elements from being trapped between the folded portions of the strip element next adjacent.

While the arrangements described above show a packaging system for the strip elements which acts to fold those strip elements in a manner which allows nesting of one folded stack relative to the next, alternative packaging systems may be developed for the strips of varying width. Thus, the present invention is not limited to the particular packaging methods set forth in the above description and shown in the drawings. For example, such strips may be packaged using conventional festoon boxes, or may be packaged using other conventional techniques.

Since various modifications can be made In my invention as herein above described, and many apparently widely different embodiments of same made within the scope of the claims without departing from such scope, it is intended that all matter contained in the accompanying specification shall be interpreted as illustrative only and not in a limiting sense.

## Claims

1. A package of strip material comprising:
a web (12) of a sheet material;
the web being fan folded so as to define a stack of web portions wherein each web portion is folded relative to one next adjacent folded web portion about a first fold line (25, 595) transverse to the web (12) and relative to a second next adjacent folded web portion about a second fold line (26, 596) transverse to the web (12) and spaced longitudinally of the web from the first fold line (25, 595);
the web (12) being divided longitudinally into a plurality of side by side strip elements (11) by longitudinally extending transversely spaced dividing lines (13, 69);
the dividing lines (13, 69) each being formed by a series of tear lines (65) in the web (12), each lying along the respective dividing line (13, 69) and each longitudinally spaced from the next by a bridge portion (61) of the dividing line (13, 69) at which the web (12) is intact resulting in the web (12) being formed of a plurality of partially attached side-by-side strip elements (11);
the dividing lines (13, 69) being arranged such that each strip element (11) is longitudinally continuous through the length of the folded web (12) and such that each strip element (11) can be unfolded in turn by pulling the strip element (11) and separating it from a remaining part of the folded web (12) by breaking the bridge portions (61);
the dividing lines (13, 69) being arranged to diverge from a parallel straight condition such that each strip element (11) varies in width along the length of the strip element (11); and
wherein the series of tear lines (65) includes a plurality of first tear lines that are axially aligned along first axes that are parallel to a side edge (90, 91) of the web (12) and a plurality of second tear lines that are formed along second axes that intersect the first axes and intersect a plane containing one side edge (90, 91) of the web (12).

2. The package according to claim 1 wherein the dividing lines (13, 69) are arranged such that adjacent pairs diverge from the straight condition in opposite directions to define portions (32) of minimum width and portions (33) of maximum width of each strip element (11).

3. The package according to claim 2, wherein the bridge portions (61) are arranged such that each of the portions of minimum width and each of the portions of maximum width of each strip element (11) are connected by at least one bridge portions (61) to the next adjacent strip element (11).

4. The package according to claim 2, wherein the bridge portions (61) are arranged such that each of the portions (32) of minimum width and each of the portions (33) of maximum width of each strip element (11) are connected by at least two bridge portions (61) to the next adjacent strip element (11).

5. The package according to any one of claims 2 to 4, wherein the dividing lines (13, 69) are arranged such that the strip elements (11) are identical to each other and the fold lines (25, 26, 555, 556) are arranged at a location along the length of the strip elements (11) such that the portions (33) of maximum width overlie one another and the portions (32) of minimum width overlie one another within the stack of web portions and such that the strip elements (11) are longitudinally offset such that the portions (33) of maximum width of one strip element are nested with portions (32) of minimum width of the next strip element throughout the stack of web portions.

6. The package according to any one of claims 1 to 5, wherein the web (12) has straight side edges (90, 91) such that the folded web portions define a rectangular block (10) with the side edges of the web portions lying in two common parallel planes, thus defining edge elements (92, 93) each having one side edge defined by an edge of the web and an opposed side edge defined by one of said dividing lines (13, 69).

7. The package according to claim 6, wherein the rectangular block (10) is contained within a packaging material (40) which applies pressure against the side edges (90, 91) of the web portions.

8. The package according to any preceding claim, wherein an end connection portion of each strip element (11) is connected by a splice connecting portion (55) to an end connecting portion of another strip element so as to form a strip that is continuous along its length through the package.

9. The package according to claim 8, wherein the strip elements (11) are stacked so as to stand generally upright and to define ends of the stack at the fold lines (25, 26, 595, 556) and wherein the end connecting portion of the bottom of each strip element is connected to the end connection portion of the top of another strip element to form the splice connecting portion (55) which extends along one end of the stack.

10. The package according to any preceding claim, wherein the package is compressed downwardly so as to decrease the height of the stack from a rest height to a compressed height and wherein the stack of web portions is engaged by packaging material (40) which maintains the compression and presses against the sides (90, 91) of the web (11).

11. A method of manufacturing a composite article containing a portion of a strip (11) comprising
providing a web (12) of a sheet material;
forming longitudinally extending, transversely spaced dividing lines (13, 69) in the web (12) by which the web is dividing longitudinally into a plurality of side by side strip elements (11);
fan folding the web (12) so as to define a stack of web portions wherein each web portion is folded relative to one next adjacent folded web portion about a first fold line (25, 595) transverse to the web (12) and relative to a second next adjacent folded web portion about a second fold line (26, 596) transverse to the web (12) and spaced longitudinally of the web from the first fold line;
forming the dividing lines (13, 69) each by a series of tear lines (65) in the web (12), each lying along the respective dividing line (13, 69) and each longitudinally spaced from the next by a bridge portion (61) of the dividing line at which the web is intact, wherein the series of tear lines (65) includes a plurality of first tear lines that are axially aligned along first axes that are parallel to a side edge (90, 91) of the web and a plurality of second tear lines that are formed along second axes that intersect the first axes and intersect a plane containing one side edge (90, 91) of the web;
arranging the dividing lines (13, 69) such that each strip element (11) is longitudinally continuous through the length of the folded web and such that each strip element can be unfolded in turn by pulling the strip element and separating it from a remaining part of the folded web by breaking the bridge portions (61);
causing the dividing lines (13, 69) to diverge from a parallel straight condition such that each strip element (11) varies in width along the length of the strip element;
withdrawing each strip element (11) from the package structure in turn at an assembly machine (88);
cutting the withdrawn strip elements (11) at longitudinally spaced positions into a series of identical strip portions;
and assembling each of the identical strip portions with other components into a respective one of the composite articles.

12. The method according to claim 11, wherein the dividing lines (13, 69) are arranged such that adjacent pairs diverge from the straight condition in opposite directions to define portions (32) of minimum width and portions (33) of maximum width of each strip element (11) and wherein the strip elements are cut such that each strip portion includes a portion of minimum width and a portion of maximum width.

13. The method according to claim 12, wherein the dividing lines (13, 69) are arranged such that the strip elements (11) are identical to each other and the fold lines (25, 26, 595, 596) are arranged at a location along the length of the strip elements (11) such that the portions of maximum width overlie one another and the portions of minimum width overlie one another within the stack of web portions and such that the strip elements are longitudinally offset such that the portions (33) of maximum width of one strip element are nested with portions (32) of minimum width of the next strip element throughout the stack of web portions.

14. The method according to claim 12 or 13, wherein the strip portions are cut from the strip element (11) so as to include a portion (33) of maximum width and at each end thereof one half of a portion (32) of minimum width.

15. The method according to claim 12 or 13, wherein the strip portions are cut from the strip elements so as to include a portion (32) of minimum width and at each end thereof one half of a portion (33) of maximum width.

16. The method according to claim 11, 12 or 13, wherein the dividing lines (13, 69) are arranged such that the web (12) has straight side edges (90, 91) with the folded web portions defining a rectangular block (10) and the side edges (90, 91) of the web portions lying in two common planes, thus defining edge elements (92, 93) each having one side edge defined by an edge of the web (12) and an opposed side edge defined by one of said dividing lines (13, 69) and wherein the edge strip elements (92, 93) are removed prior to said withdrawing.

17. The method according to claim 16, wherein the edge elements (92, 93) are removed while folded by breaking them away from the block as a stack.

18. The method according to claim 16, wherein the rectangular block is contained within a packaging material (40) which applies pressure against the side edges (90, 91) of the web portions and wherein the packaging material (40) is removed prior to said unfolding.

19. The method according to any one of claims 11 to 18, wherein the bridge portions (61) are arranged such that each of the portions (32) of minimum width and each of the portions (33) of maximum width of each strip element (11) are connected by at least one bridge portion (61) to the next adjacent strip element (11).

20. The method according to any one of claims 11 to 18, wherein the bridge portions (61) are arranged such that each of the portions (32) of minimum width and each of the portions (33) of maximum width of each strip element (11) are connected by at least two bridge portions (61) to the next adjacent strip element.

21. The method according to any one of claims 11 to 20, wherein an end connecting portion (55) of each strip element (11) is connected to an end connecting portion of another strip element (11) so as to form a strip that is continuous along its length through the package.

22. The method according to claim 19, wherein the strip elements (11) are stacked so as to stand generally upright and to define ends of the stack at the fold lines (25, 26, 555, 556) and wherein the end connecting portion of the bottom of each strip element is connected to the end connecting portion of the top of the another strip element to form the splice connecting portion (55) which exists along one end of the stack.

23. The method according to any one of claims 11 to 22, wherein the package is compressed downwardly so as to decrease the height of the stack (20, 21, 22. 23) from a rest height to a compressed height and wherein the package is engaged by packaging material (40) which maintains the compression and presses against the sides (90, 91) of the web (12).

## Patentansprüche

1. Packung aus Bandmaterial, die umfasst:
eine Bahn (12) aus einem Blattmaterial;
wobei die Bahn zick-zack-förmig gefaltet ist zur Bildung eines Stapels aus Bahnabschnitten und jeder Bahnabschnitt gefaltet ist: gegenüber einem nächsten benachbarten gefalteten Bahnabschnitt um einer erste Faltlinie (25, 595) quer zur Bahn (12) und gegenüber einem zweiten nächsten benachbarten Bahnabschnitt um eine zweite Faltlinie (26, 596), die quer zur Bahn (12) verläuft und in Längsrichtung der Bahn von der ersten Faltlinie (25, 595) beabstandet ist;
wobei die Bahn (12) in Längsrichtung unterteilt ist in eine Mehrzahl von nebeneinander liegenden Bandelementen (11) durch sich in Längsrichtung erstreckende quer beabstandete Unterteilungslinien (13, 69);
wobei die Unterteilungslinien (13, 69) jeweils gebildet sind durch eine Reihe von Reißlinien (65) in der Bahn (12), von denen jede sich entlang der jeweiligen Unterteilungslinie (13, 69) erstreckt und jede in Längsrichtung von der nächsten durch einen Überbrückungsabschnitt (61) der Unterteilungslinie (13, 69) beabstandet ist, bei dem die Bahn (12) intakt ist, wodurch die Bahn (12) aus einer Mehrzahl von teilweise befestigten nebeneinander liegenden Bandelementen (11) gebildet ist;
wobei die Unterteilungslinien (13, 69) so angeordnet sind, dass jedes Bandelement (11) auf der Länge der gefalteten Bahn (12) sich in Längsrichtung durchgehend erstreckt, und dass jedes Bandelement (11) seinerseits entfaltet werden kann durch Ziehen am Bandelement (11) und durch sein Abtrennen vom verbleibenden Teil der gefalteten Bahn (12) durch Unterbrechen der Überbrückungsabschnitte (61);
wobei die Unterteilungslinien (13, 69) so angeordnet sind, dass sie von einem parallelen geraden Zustand so abweichen, dass die Breite jedes Bandelement (11) entlang seiner Länge variiert; und
wobei die Reihe von Reißlinien (65) enthält: eine Mehrzahl von ersten Reißlinien, die axial entlang erster Achsen ausgerichtet sind, die parallel zu einer Seitenkante (90, 91) der Bahn (12) sind, und eine Mehrzahl von zweiten Reißlinien, die entlang zweiter Achsen gebildet sind, die die ersten Achsen und eine Ebene schneiden, die eine Seitenkante (90, 91) der Bahn (12) enthält.

2. Packung nach Anspruch 1, bei der die Unterteilungslinien (13, 69) so angeordnet sind, dass benachbarte Paare vom geraden Zustand in entgegengesetzten Richtungen abweichen und Abschnitte (32) mit minimaler Breite (33) sowie Abschnitte (33) mit maximaler Breite jedes Bandelements (11) bilden.

3. Packung nach Anspruch 2, bei der die Überbrückungsabschnitte (61) so angeordnet sind, dass jeder der Abschnitte mit minimaler Breite und jeder der Abschnitte mit maximaler Breite jedes Bandelements (11) durch mindestens einen Überbrückungsabschnitt (61) mit dem nächsten angrenzenden Bandelement (11) verbunden sind.

4. Packung nach Anspruch 2, bei der die Überbrückungsabschnitte (61) so angeordnet sind, dass jeder der Abschnitte (32) mit minimaler Breite und jeder der Abschnitte (33) mit maximaler Breite jedes Bandelements (11) durch wenigstens zwei Überbrückungsabschnitte (61) mit dem nächsten angrenzenden Bandelemente (11) verbunden ist.

5. Packung nach einem der Ansprüche 2 bis 4, bei der die Unterteilungslinien (13, 69) so angeordnet sind, dass die Bandelemente (11) identisch sind, und die Faltlinien (25, 26, 555, 556) an einem Ort entlang der Länge der Bandelemente (11) so angeordnet sind, dass die Abschnitte (33) mit maximaler Länger einander überdecken, und die Abschnitte (32) mit minimaler Breite einander im Stapel aus Bahnabschnitten überdecken, und so angeordnet sind, dass die Bandelemente (11) in Längsrichtung so versetzt sind, dass die Abschnitte (33) mit maximaler Breite eines Bandelements mit Abschnitten (32) mit minimaler Breite des nächsten Bandelements durch den ganzen Stapel aus Bandabschnitten hindurch verschachtelt sind.

6. Packung nach einem der Ansprüche 1 bis 5, bei der die Bahn (12) gerade Seitenkanten (90, 91) so hat, dass die gefalteten Bahnabschnitte einen rechteckigen Block (10) bilden, wobei die Seitenkanten der Bahnabschnitte in zwei gemeinsamen parallelen Ebenen liegen und somit Kantenelemente (92, 93) bilden, von denen jedes eine Seitenkante hat, die durch eine Kante der Bahn gebildet ist, und eine gegenüberliegende Seitenkante hat, die durch eine der Unterteilungslinien (13, 69) gebildet ist.

7. Packung nach Anspruch 6, bei der der rechteckige Block (10) in einem Verpackungsmaterial (40) enthalten ist, das auf die Seitenkanten (90, 91) der Bahnabschnitte einen Druck ausübt.

8. Packung nach einem der vorhergehenden Ansprüche, bei der ein Endverbindungsabschnitt jedes Bandelements (11) durch einen Spleißverbindungsabschnitt (55) mit einem Endverbindungsabschnitt eines weiteren Bandelements zur Bildung eines Bands verbunden ist, das sich auf seiner Länge durchgehend durch die Packung erstreckt.

9. Packung nach Anspruch 8, bei der die Bandelemente (11) so gestapelt sind, dass sie im Allgemeinen aufrecht stehen und Enden des Stapels an den Faltlinien (25, 26, 595, 556) bilden, und bei der der Endverbindungsabschnitt des Unterteils jedes Bandelements mit dem Endverbindungsabschnitt des Oberteils eines weiteren Bandelements verbunden ist zur Bildung des Spleißverbindungsabschnitts (55), der sich entlang einem Ende des Stapels erstreckt.

10. Packung nach einem der vorhergehenden Ansprüche, bei der die Packung nach unten zusammengedrückt wird, um die Höhe des Stapels von einer Ruhehöhe auf eine Zusammendrückungshöhe herabzusetzen, und bei der der Stapel aus Bahnabschnitten mit Verpackungsmaterial (40) in Eingriff steht, das die Zusammendrückung aufrechterhält und auf die Seiten (90, 91) der Bahn (11) drückt.

11. Verfahren zur Herstellung eines Verbundartikels, der einen Abschnitt eines Bands (11) enthält, das folgendes umfasst:
Vorsehen einer Bahn (12) aus Blattmaterial;
Bilden von sich in Längsrichtung erstreckenden, quer beabstandeten Unterteilungslinien (13, 69) in der Bahn (12), durch die die Bahn in Längsrichtung in eine Mehrzahl von seitlich nebeneinander liegenden Bandelementen (11) unterteilt wird;
zickzackförmiges Falten der Bahn (12) zur Bildung eines Stapels aus Bahnabschnitten, wobei jeder Bahnabschnitt gefaltet wird: gegenüber einem nächsten angrenzenden gefalteten Bahnabschnitt um eine erste Faltlinie (25, 595) quer zur Bahn (12) und gegenüber einem zweiten nächsten angrenzenden gefalteten Bahnabschnitt um eine zweite Faltlinie (26, 596) quer zur Bahn (12) und längs der Bahn im Abstand von der ersten Faltlinie;
Bilden der Unterteilungslinien (13, 69) jeweils durch eine Reihe von Reißlinien (65) in der Bahn (12), von denen jede sich entlang der jeweiligen Unterteilungslinie (13, 69) erstreckt, und jede in Längsrichtung von der nächsten durch einen Überbrückungsabschnitt (61) der Unterteilungslinie beabstandet ist, an dem die Bahn intakt ist, wobei die Reihe von Reißlinien (65) enthält: eine Mehrzahl von ersten Reißlinien, die axial entlang erster Achsen axial ausgerichtet sind, die parallel zu einer Seitenkanten (90, 91) der Bahn sind, und eine Mehrzahl von zweiten Reißlinien, die längs zweiter Achsen gebildet sind, die die ersten Achsen schneiden und eine Ebene schneiden, die eine Seitenkante (90, 91) der Bahn enthält;
Anordnen der Unterteilungslinien (13, 69) derart, dass jedes Bandelement (11) sich in Längsrichtung durchgehend durch die Länge der gefalteten Bahn erstreckt, und derart, dass jedes Bandelement entfaltet werden kann durch Ziehen des Bandelements und dessen Trennen vom verbleibenden Teil der gefalteten Bahn durch Zerbrechen der Überbrückungsabschnitte (61);
Ablenken der Unterteilungslinien (13, 69) von einem parallelen geraden Zustand derart, dass jedes Bandelement (11) seine Breite entlang der Länge des Bandelements variiert;
Entnehmen jedes Bandelementes (11) aus dem Packungsaufbau an einer Montagemaschine (88);
Schneiden der entnommenen Bandelemente (11) an in Längsrichtung beabstandeten Stellen in eine Reihe von identischen Bandabschnitten;
und Zusammenbauen der identischen Bandabschnitte mit anderen Komponenten zu jeweils einem der Verbundartikel.

12. Verfahren nach Anspruch 11, bei dem die Unterteilungslinien (13, 69) derart angeordnet sind, dass aneinandergrenzende Paare vom geraden Zustand in entgegen gesetzten Richtungen abweichen, um Abschnitte (32) mit minimaler Breite und Abschnitte (33) mit maximaler Breite jedes Bandelements (11) zu bilden, und bei dem die Bandelemente derart geschnitten werden, dass jeder Bandabschnitt einen Abschnitt mit minimaler Breite und einen Abschnitt mit maximaler Breite enthält.

13. Verfahren nach Anspruch 12, bei dem die Unterteilungslinien (13, 69) derart angeordnet sind, dass die Bandelemente (11) identisch sind und die Faltlinien (25, 26, 595, 596) an einem Ort entlang der Länge der Bandelemente (11) derart angeordnet sind, dass die Abschnitte mit maximaler Breite einander überdecken, und die Abschnitte mit minimaler Breite im Stapel von Bandabschnitten einander überdecken, und dass die Bandelemente in Längsrichtung derart versetzt sind, dass die Abschnitte (33) mit maximaler Breite eines Bandelements verschachtelt sind mit Abschnitten (32) mit minimaler Breite des nächsten Bandelements durch den ganzen Stapel von Bahnabschnitten hindurch.

14. Verfahren nach Anspruch 12 oder 13, bei dem die Bandabschnitte vom Bandelement (11) derart abgeschnitten werden, dass sie einen Abschnitt (33) mit maximaler Breite und an jedem Ende hiervon einem halben Abschnitt (32) mit minimaler Breite enthalten.

15. Verfahren nach Anspruch 12 oder 13, bei dem die Bandabschnitte von den Bandelementen derart abgeschnitten werden, dass sie einen Abschnitt (32) mit minimaler Breite und an jedem Ende hiervon einen halben Abschnitt (33) mit maximaler Breite enthalten.

16. Verfahren nach Anspruch 11, 12 oder 13, bei dem die Unterteilungslinien (13, 69) derart angeordnet werden, dass die Bahn (12) gerade Seitenkanten (90, 91) hat, wobei die gefalteten Bahnabschnitte einen rechteckigen Block (10) bilden und die Seitenkanten (90, 91) der Bahnabschnitte in zwei gemeinsamen Ebenen liegen, wodurch Kantenelemente (92, 93) gebildet werden, von denen jedes eine Seitenkante hat, die durch eine Kante der Bahn (12) gebildet wird, und eine gegenüberliegende Seitenkante hat, die durch eine der Unterteilungslinien (13, 69) gebildet ist, und bei dem die Kantenbandelemente (92, 93) vor der Entnahme entfernt werden.

17. Verfahren nach Anspruch 16, bei dem die Kantenelemente (92, 93) in gefaltetem Zustand **dadurch** entfernt werden, dass sie vom Block als Stapel weggebrochen werden.

18. Verfahren nach Anspruch 16, bei dem der rechteckige Block in einem Verpackungsmaterial (40) enthalten ist, das auf die Seitenkanten (90, 91) der Bahnabschnitte einen Druck ausübt, und bei dem das Verpackungsmaterial (40) vor dem Entfalten entfernt wird.

19. Verfahren nach einem der Ansprüche 11 bis 18, bei dem die Überbrückungsabschnitte (61) derart angeordnet werden, dass jeder Abschnitte (32) mit minimaler Breite und jeder der Abschnitte (33) mit maximaler Breite jedes Bandelements (11) durch wenigstens einem Überbrückungsabschnitt (61) mit dem nächsten angrenzenden Bandelement (11) verbunden ist.

20. Verfahren nach einem der Ansprüche 11 bis 18, bei dem die Überbrückungsabschnitte (61) derart angeordnet sind, dass jeder der Abschnitte (32) mit minimaler Breite und jeder der Abschnitte (33) mit maximaler Breite des Bandelements (11) durch wenigstens zwei Überbrückungsabschnitte (61) mit dem nächsten angrenzenden Bandelement verbunden ist.

21. Verfahren nach einem der Ansprüche 11 bis 20, bei dem ein Endverbindungsabschnitt (55) jedes Bandelements (11) mit einem Endverbindungsabschnitt eines weiteren Bandelements (11) zur Bildung eines Bands verbunden ist, das sich auf seiner Länge ohne Unterbrechung durch die Packung erstreckt.

22. Verfahren nach Anspruch 19, bei dem die Bandelemente (11) so gestapelt werden, dass sie aufrecht stehen, um die Enden des Stapels an den Faltlinien (25, 26, 555, 556) zu bilden, und bei dem der Endverbindungsabschnitt des Unterteils jedes Bandelements mit dem Endverbindungsabschnitt des Oberteils eines weiteren Bandelements verbunden wird zur Bildung des Spleißverbindungsabschnitts (55), der sich entlang einem Ende des Stapels befindet.

23. Verfahren nach einem der Ansprüche 11 bis 22, bei dem die Packung nach unten zusammengedrückt wird, um die Höhe des Stapels (20, 21, 22, 23) von einer Ruhehöhe auf eine Zusammendrückungshöhe zu verringern, und bei dem die Packung mit dem Verpackungsmaterial (40) in Eingriff steht, das die Zusammendrückung aufrechterhält und gegen die Seiten (90, 91) der Bahn (12) drückt.

## Revendications

1. Emballage d'une bande de matériau comprenant :
une bande continue (12) d'un matériau en feuille ;
la bande continue étant pliée en accordéon de manière à définir une pile de parties de bande continue dans laquelle chaque partie de bande continue est pliée par rapport à une partie de bande continue pliée adjacente suivante autour d'une première ligne de pliure (25, 595) transversale par rapport à la bande continue (12) et par rapport à une seconde partie de bande continue pliée adjacente suivante autour d'une seconde ligne de pliure (26, 596) transversale par rapport à la bande continue (12) et espacée dans le sens longitudinal de la bande continue de la première ligne de pliure (25, 595) ;
la bande continue (12) étant divisée longitudinalement en une pluralité d'éléments de bande (11) par des lignes de division espacées transversalement et s'étendant longitudinalement (13, 69) ;
les lignes de division (13, 69) étant chacune formée par une série de lignes de déchirure (65) dans la bande continue (12), chacune se trouvant le long de la ligne de division respective (13, 69) et chacune étant espacée longitudinalement de la suivante par une partie formant pont (61) de la ligne de division (13, 69) au niveau de laquelle la bande continue (12) est intacte, ce qui fait que la bande continue (12) est formée d'une pluralité d'éléments de bande fixés côte à côte (11) ;
les lignes de division (13, 69) étant disposées de manière à ce que chaque élément de bande (11) est longitudinalement continu sur toute la longueur de la bande pliée (12) et de sorte que chaque élément de bande (11) puisse être déplié à tour de rôle en tirant l'élément de bande (11) et en le séparant d'une partie restante de la bande continue pliée (12) en cassant les parties formant pont (61) ;
les lignes de division (13, 69) étant disposées pour s'écarter d'un état droit parallèle de sorte que chaque élément de bande (11) varie en largeur le long de la longueur de l'élément de bande (11) ; et
dans lequel la série de lignes de déchirure (65) comprend une pluralité de premières lignes de déchirure qui sont alignées axialement le long de premiers axes qui sont parallèles à un bord latéral (90, 91) de la bande continue (12) et une pluralité de secondes lignes de déchirure qui sont formées le long de seconds axes qui croisent les premiers axes et croisent un plan contenant un bord latéral (90, 91) de la bande continue (12).

2. Emballage selon la revendication 1 dans lequel les lignes de division (13, 69) sont disposées de manière à ce que des paires adjacentes dévient de l'état droit dans des directions opposées pour définir des parties (32) d'une largeur minimale et des parties (33) d'une largeur maximale de chaque élément de bande (11).

3. Emballage selon la revendication 2, dans lequel les parties formant pont (61) sont disposées de manière à ce que chacune des parties de largeur minimale et chacune des parties de largeur maximale de chaque élément de bande (11) sont reliées par au moins une partie formant pont (61) à l'élément de bande adjacent suivant (11).

4. Emballage selon la revendication 2, dans lequel les parties formant pont (61) sont disposées de manière à ce que chacune des parties (32) de largeur minimale et chacune des parties (33) de largeur maximale de chaque élément de bande (11) sont reliées par au moins deux parties formant pont (61) à l'élément de bande adjacent suivant (11).

5. Emballage selon l'une quelconque des revendications 2 à 4, dans lequel les lignes de division (13, 69) sont disposées de manière à ce que les éléments de bande (11) soient identiques les uns aux autres et que les lignes de pliure (25, 26, 555, 556) soient disposées à un endroit le long de la longueur des éléments de bande (11) de sorte que les parties (33) de largeur maximale se recouvrent les unes les autres et que les parties (32) de largeur minimale se recouvrent les unes les autres dans la pile de parties de bande continue et de manière à ce que les éléments de bande (11) soient longitudinalement décalés pour que les parties (33) de largeur maximale d'un élément de bande s'emboîtent dans les parties (32) de largeur minimale de l'élément de bande suivant dans toute la pile de parties de bande continue.

6. Emballage selon l'une quelconque des revendications 1 à 5, dans lequel la bande continue (12) présente des bords latéraux droits (90, 91) de sorte que les parties de bande continue pliées définissent un bloc rectangulaire (10), les bords latéraux des parties de bande continue se trouvant dans deux plans parallèles communs, définissant ainsi des éléments de bord (92, 93) ayant chacun un bord latéral défini par un bord de la bande et un bord latéral opposé défini par l'une desdites lignes de division (13, 69).

7. Emballage selon la revendication 6, dans lequel le bloc rectangulaire (10) est contenu dans un matériau d'emballage (40) qui exerce une pression contre les bords latéraux (90, 91) des parties de bande continue.

8. Emballage selon l'une quelconque des revendications précédentes, dans lequel une partie de l'extrémité de raccordement de chaque élément de bande (11) est relié par une partie de raccordement de jonction (55) à une partie d'extrémité de raccordement d'un autre élément de bande de manière à former une bande qui est continue le long de sa longueur à travers l'emballage.

9. Emballage selon la revendication 8, dans lequel les éléments de bande (11) sont empilés de manière à se tenir généralement debout et à définir des extrémités de la pile au niveau des lignes de pliure (25, 26, 595, 556) et dans lequel la partie d'extrémité de raccordement de la partie inférieure de chaque élément de bande est raccordé à la partie d'extrémité de raccordement de la partie supérieure d'un autre élément de bande pour former la partie de raccordement de jonction (55) qui s'étend le long d'une extrémité de la pile.

10. Emballage selon l'une quelconque des revendications précédentes, dans lequel l'emballage est comprimé vers le bas de manière à réduire la hauteur de la pile depuis une hauteur de repos jusqu'à une hauteur comprimée et dans lequel la pile de parties de bande continue est engagée par le matériau d'emballage (40) qui maintient la compression et appuie contre les côtés (90, 91) de la bande continue (11).

11. Procédé de fabrication d'un article composite contenant une partie d'une bande (11) comprenant les étapes consistant à
fournir une bande continue (12) d'un matériau en feuille ;
former des lignes de division espacées transversalement et s'étendant longitudinalement (13, 69) dans la bande continue (12) grâce auxquelles la bande continue se divise longitudinalement en une pluralité d'éléments de bande côte à côte (11) ;
plier en accordéon la bande continue (12) de manière à définir une pile de parties de bande continue dans laquelle chaque partie de bande continue est pliée par rapport à une partie de bande continue pliée adjacente suivante autour d'une première ligne de pliure (25, 595) transversale par rapport à la bande continue (12) et par rapport à une seconde partie de bande continue pliée adjacente suivante autour d'une seconde ligne de pliure (26, 596) transversale par rapport au tissu (12) et espacée dans le sens longitudinal du tissu de la première ligne de pliure ;
former chacune des lignes de division (13, 69) par une série de lignes de déchirure (65) dans la bande continue (12), chacune se trouvant le long de la ligne de division respective (13, 69) et chacune étant espacée longitudinalement de la suivante par une partie formant pont (61) de la ligne de division au niveau de laquelle la bande continue est intacte, dans lequel la série de lignes de déchirure (65) comprend une pluralité de premières lignes de déchirure qui sont alignées axialement le long de premiers axes qui sont parallèles à un bord latéral (90, 91) de la bande continue et une pluralité de secondes lignes de déchirure qui sont formées le long de seconds axes qui croisent les premiers axes et croisent un plan contenant un bord latéral (90, 91) de la bande (12) continue ;
disposer les lignes de division (13, 69) de sorte que chaque élément de bande (11) est longitudinalement continu sur toute la longueur de la bande continue pliée et de sorte que chaque élément de bande puisse être déplié à tour de rôle en tirant l'élément de bande et en le séparant d'une partie restante de la bande continue pliée en cassant les parties formant pont (61) ;
provoquer la déviation des lignes de division (13, 69) d'un état droit parallèle de sorte que chaque élément de bande (11) varie en largeur le long de la longueur de l'élément de bande ;
retirer chaque élément de bande (11) de la structure d'emballage à tour de rôle dans une machine d'assemblage (88) ;
couper les éléments de bande retirés (11) au niveau de positions espacées longitudinalement dans une série de parties de bande identiques ;
et assembler chacune des parties de bande identiques avec d'autres composants dans un article respectif des articles composites.

12. Procédé selon la revendication 11, dans lequel les lignes de division (13, 69) sont disposées de telle manière que les paires adjacentes s'écartent de l'état droit dans des directions opposées pour définir des parties (32) d'une largeur minimale et des parties (33) d'une largeur maximale de chaque élément de bande (11) et dans lequel les éléments de bande sont coupés de sorte que chaque partie de bande comprend une partie de largeur minimale et une partie de largeur maximale.

13. Procédé selon la revendication 12, dans lequel les lignes de division (13, 69) sont disposées de sorte que les éléments de bande (11) sont identiques les uns aux autres et que les lignes de pliure (25, 26, 595, 596) sont disposées à un endroit le long de la longueur des éléments de bande (11) de sorte que les parties de largeur maximale se recouvrent les unes les autres et que les parties de largeur minimale se recouvrent les unes les autres dans la pile de parties de bande continue et de manière à ce que les éléments de bande soient longitudinalement décalés pour que les parties (33) de largeur maximale d'un élément de bande s'emboîtent dans les parties (32) de largeur minimale de l'élément de bande suivant dans toute la pile de parties de bande continue.

14. Procédé selon la revendication 12 ou 13, dans lequel les parties de bande sont coupées de l'élément de bande (11) de manière à inclure une partie (33) de largeur maximale et, au niveau de chaque extrémité de celle-ci, une moitié d'une partie (32) de largeur minimale.

15. Procédé selon la revendication 12 ou 13, dans lequel les parties de bande sont coupées des éléments de bande de manière à comprendre une partie (32) de largeur minimale et, au niveau de chaque extrémité de celle-ci, une moitié d'une partie (33) de largeur maximale.

16. Procédé selon la revendication 11, 12 ou 13, dans lequel les lignes de division (13, 69) sont disposées de sorte que la bande continue (12) présente des bords latéraux droits (90, 91), les parties de bande continue pliées définissant un bloc rectangulaire (10) et les bords latéraux (90,91) des parties de bande continue se trouvant dans deux plans communs, définissant ainsi des éléments de bord (92, 93) ayant chacun un bord latéral défini par un bord de la bande continue (12) et un bord latéral opposé défini par l'une desdites lignes de division (13, 69) et dans lequel les éléments de bande du bord (92, 93) sont retirés avant ledit retrait.

17. Procédé selon la revendication 16, dans lequel les éléments de bord (92, 93) sont retirés pendant qu'ils sont pliés en les rompant à l'écart du bloc comme pile.

18. Procédé selon la revendication 16, dans lequel le bloc rectangulaire est contenu dans un matériau d'emballage (40) qui exerce une pression contre les bords latéraux (90, 91) des parties de bande continue et dans lequel le matériau d'emballage (40) est retiré avant ledit dépliage.

19. Procédé selon l'une quelconque des revendications 11 à 18, dans lequel les parties formant pont (61) sont disposées de sorte que chacune des parties (32) de largeur minimale et chacune des parties (33) de largeur maximale de chaque élément de bande (11) sont reliées par au moins une partie formant pont (61) à l'élément de bande adjacent suivant (11).

20. Procédé selon l'une quelconque des revendications 11 à 18, dans lequel les parties formant pont (61) sont disposées de manière à ce que chacune des parties (32) de largeur minimale et chacune des parties (33) de largeur maximale de chaque élément de bande (11) sont connectées par au moins deux parties formant pont (61) à l'élément de bande adjacent suivant.

21. Procédé selon l'une quelconque des revendications 11 à 20, dans lequel une partie d'extrémité de raccordement (55) de chaque élément de bande (11) est raccordé à une partie d'extrémité de raccordement d'un autre élément de bande (11) de manière à former une bande qui est continue le long de sa longueur à travers l'emballage.

22. Procédé selon la revendication 19, dans lequel les éléments de bande (11) sont empilés de manière à se tenir généralement debout et à définir des extrémités de la pile au niveau des lignes de pliure (25, 26, 555, 556) et dans lequel la partie d'extrémité de raccordement de la partie inférieure de chaque élément de bande est raccordé à la partie d'extrémité de raccordement de la partie supérieure d'un autre élément de bande pour former la partie de raccordement de jonction (55) qui existe le long d'une extrémité de la pile.

23. Procédé selon l'une quelconque des revendications 11 à 22, dans lequel l'emballage est comprimé vers le bas de manière à réduire la hauteur de la pile (20, 21, 22, 23) depuis une hauteur de repos jusqu'à une hauteur comprimée et dans lequel l'emballage est engagé par le matériau d'emballage (40) qui maintient la compression et appuie contre les côtés (90, 91) de la bande continue (12).
